# EUROPÄISCHE PATENTSCHRIFT

(11) **EP 4 556 306 B1**
(45) Veröffentlichungstag und Bekanntmachung des Hinweises auf die Patenterteilung: **11.02.2026**
(21) Anmeldenummer: 24210616.9
(22) Anmeldetag: 04.11.2024
(51) Int. Cl.: B60N 2/68, B60N 2/06, B60N 2/30, B64D 11/06, B60R 22/26

(54) **ERWEITERBARE SITZANORDNUNG FÜR EIN FAHRZEUG**
EXPANDABLE SEAT ASSEMBLY FOR A VEHICLE
ENSEMBLE DE SIÈGE EXTENSIBLE POUR VÉHICULE

(30) Priorität: 16.11.2023 DE 102023131924
(43) Veröffentlichungstag der Anmeldung: 21.05.2025
(73) Patentinhaber: REIKON GmbH & Co. KG, 88097 Eriskirch (DE)
(72) Erfinder: REBER, Ramon, 88099 Neukirch (DE)
(74) Vertreter: Riebling, Peter

(56) Entgegenhaltungen:
- EP-A1- 1 864 850
- DE-A1- 102019 206 965
- FR-A1- 2 957 862

## Beschreibung

Gegenstand der Erfindung ist eine erweiterbare Sitzanordnung für ein Fahrzeug zur Bereitstellung von mindestens einem zusätzlichen Sitzplatz nach dem Oberbegriff des Patentanspruches 1.

Die im Folgenden beschriebene Sitzanordnung kann in einem Luft-, Land- oder Wasserfahrzeugen verbaut werden, wobei insbesondere auf die Verwendung in Reisemobilen eingegangen wird. Als Reisemobil kann ein Freizeitmobil, Wohnmobil, Wohnwagen, Wohnanhänger usw. bezeichnet werden.

Die in dem Reisemobil vorhandenen Sitzplätze sind ausgelegt für ein, zwei oder drei Personen, wobei jeder weitere Sitzplatz auch eine Erhöhung des Gesamtgewichts des Reisemobils zur Folge hat.

Je nach Anzahl der sich in dem Reismobil aufhaltenden Personen, sei es während der Fahrt oder auf einem Stellplatz, besteht der Wunsch die vorhandenen Sitzanordnungen auf einfache und praktikable Weise zu erweitern, beispielsweise von einer Zweiersitzbank zu einer Dreiersitzbank.

Eine derartige Sitzanordnung für ein Fahrzeug, welche beispielsweise mittels einer Verschiebeeinheit eine Sitzbank um einen weiteren Sitzplatz erweitern kann zeigt die DE 102019 206 965 A1. Diese Sitzanordnung umfasst eine Sitzbank und einen an der Sitzbank angeordneten Zusatzsitz. Dieser Zusatzsitz besteht aus einer Zusatz-Rückenlehne und einem Zusatz-Sitzbereich, wobei die Zusatz-Rückenlehne einen Zusatz-Sitzrahmen umfasst, der linearverschiebbar mit der Rückenlehne der Sitzbank verbunden ist und zum Aufbau des Zusatzsitzes aus der Sitzbank ausziehbar ist. Zum Verstauen des Zusatz-Sitzrahmens kann dieser wieder in die Sitzbank eingeschoben werden.

So umfasst der Zusatzsitz ebenfalls eine Rückenlehne und einen Sitzbereich für das Gesäß der darauf sitzenden Person, wie es auch bei der Sitzbank vorhanden ist. Diese Zusatz-Rückenlehne wiederum umfasst einen Rückenlehnenrahmen, der im eingeschobenen Zustand in der Rückenlehne der Sitzbank aufgenommen wird und zur Benutzung und Erweiterung der Sitzbank seitlich aus der Rücklehne der Sitzbank herausgezogen werden kann. Der Zusatz-Rückenlehnenrahmen ist dabei linear verschiebbar.

Nach dem Herausziehen des Zusatz-Rückenlehnenrahmen aus der Rückenlehne wird zusätzlich ein Zusatz-Sitzteilrahmen montiert, beispielsweise durch Ausklappen aus einer Ruheposition, um ein Rahmengestellt für den Zusatz-Sitz zu schaffen. Anschließend kann eine Polsterung auf dem zusammengesetzten Zusatz-Sitzrahmen angebracht werden, um den Zusatzsitz zu vervollständigen.

Somit kann die zuvor für eine oder mehrere Personen ausgelegte Sitzbank durch den so geschaffenen Zusatzsitz um mindestens einen weiteren Sitzplatz erweitert werden.

Nachteilig an dieser Sitzanordnung ist jedoch, dass der Zusatz-Sitzbereich oder in diesem Fall der Zusatz-Sitzteilrahmen unabhängig von dem Zusatz-Rückenlehnenrahmen klappbar an der Sitzbank angeordnet ist oder als getrenntes Bauteil separat an der Sitzbank montiert werden muss. Dadurch müssen händisch weitere Betätigungsschritte ausgeführt werden, um den Zusatzsitz in seine Funktionsstellung in der Endposition zu bringen. Zusätzlich können aufgrund eines fehlenden Stützfußes nur geringe Lasten aufgenommen werden. Dadurch steigt auch das Verletzungsrisiko bei einer unsachgemäßen Verwendung.

Die FR 2 957 862 A1 beschreibt eine Sitzanordnung für ein Fahrzeug, bestehend aus einer Sitzbank mit einer Rückenlehne und einem Sitzteil sowie einem aus der Sitzbank ausziehbaren Zusatzsitz. Dieser Zusatzsitz wird aus mehreren lineargeführten Rohren gebildet, die bei Bedarf aus der fest verbauten Sitzbank herausgezogen werden können. Zur Bildung des Zusatz-Lehnenelements und des gesäßseitigen Zusatz-Sitzelements können Stoffe zwischen den ausgezogenen Rohren gespannt werden.

Der Aufbauvorgang erfordert jedoch mehrere Handgriffe, was zu einem zeitaufwendigen Prozess führt. Darüber hinaus ist der so gebildete Zusatzsitz nicht für hohe Belastungen geeignet.

Die EP 1 864 850 A1 zeigt eine Sitzanordnung für ein Fahrzeug, die eine Sitzbank mit einem Rückenlehnenrahmen und einem Sitzteilrahmen umfasst, sowie einen an der Sitzbank angeordneten ausziehbaren Zusatzsitz. Dieser Zusatzsitz besteht aus einem Zusatz-Sitzrahmen, der sich aus einem Zusatz-Rückenlehnenrahmen und einem gesäßseitigen Zusatz-Sitzteilrahmen zusammensetzt. Der Zusatz-Sitzteilrahmen ist starr mit dem Zusatz-Rückenlehnenrahmen verbunden und kann gemeinsam mit diesem aus der Sitzbank ausgezogen werden.

Bei dieser Sitzanordnung ist jedoch die Sicherheit nicht in ausreichendem Maße gewährleistet, da der Zusatz-Rückenlehnenrahmen nicht ausreichend stabil ist.

Der Erfindung liegt deshalb die Aufgabe zugrunde, eine Sitzanordnung mit einer um mindestens einem Sitzplatz erweiterbaren Sitzbank für ein Fahrzeug bereitzustellen, wobei mittels einfacher Handhabung und unter Berücksichtigung einer möglichen Belastung des Zusatzsitzes eine sicherere Verwendung gewährleisten ist.

Die Aufgabe wird erfindungsgemäß durch die Merkmale des unabhängigen Patentanspruches gelöst, während vorteilhafte Ausgestaltungen und Weiterbildungen der Erfindung den Unteransprüchen entnommen werden können. Der Zusatz-Sitzteilrahmen mit dem Zusatz-Rückenlehnenrahmen starr verbunden und mit diesem gemeinsam aus der Sitzbank ausziehbar.

Somit kann eine Sitzanordnung für ein Fahrzeug geschaffen werden, die eine Sitzbank mit einem Rückenlehnenrahmen und einem Sitzteilrahmen umfasst, sowie einen an der Sitzbank angeordneten ausziehbaren Zusatzsitz, der aus einem Zusatz-Sitzrahmen gebildet ist, der wiederum aus einem Zusatz-Rückenlehnenrahmen und einem gesäßseitigen Zusatz-Sitzteilrahmen besteht, wobei der Zusatz-Rückenlehnenrahmen mindestens zwei in der Sitzbank linear geführte, verschiebbare Horizontalstreben umfasst, die zum Benutzen des Zusatzsitzes aus der Sitzbank seitlich ausziehbar sind und zum Verstauen des Zusatzsitzes in die Sitzbank einschiebbar sind. Dabei weist der Zusatzsitz den Zusatz-Sitzrahmen den damit erfindungsgemäß starr verbundenen Zusatz-Rückenlehnenrahmen auf.

Über die in der Sitzbank lineargeführten Horizontalstreben ist der Zusatzsitz aus der Sitzbank ausziehbar, und zum Verstauen des Zusatzsitzes wieder in die Sitzbank einschiebbar.

Bevorzugt ist es vorgesehen, dass der Zusatz-Rückenlehnenrahmen zwei parallele, lineargeführte Horizontalstreben und zumindest eine Vertikalstrebe umfasst, die an den freien Enden der Horizontalstreben angebracht ist. Die beiden Horizontalstreben sind in der Sitzbank linear beweglich geführt. Beispielsweise handelt es sich dabei um Stäbe mit einem runden Querschnitt, die in entsprechenden Rohren des Sitzrahmen der Sitzbank geführt sind. Diese Rohre des Sitzrahmens bilden somit eine Linearführung für die Stäbe und sind Bestandteile des Rückenlehnenrahmen.

Alternativ können die Stäbe und Rohre einen eckigen Querschnitt, z.B. viereckig aufweisen.

Bevorzugt weist die Linearführung mindestens ein Gleitlager zur Führung der Horizontalstrebe auf.

Alternativ weist die Linearführung mindestens ein Wälzlager zur Führung der Horizontalstrebe auf.

Die Vertikalstrebe, welche die beiden freien Enden der Horizontalstreben verbindet, kann zum Ausziehen und Einschieben des Zusatz-Sitzrahmens per Hand gegriffen werden.

Auch kann per Hand eine bevorzugte, vorhandene Verriegelung betätigt werden, um die Verschiebung zu ermöglichen.

Nicht zur Erfindung gehörend, kann ergänzend für die Linearverschiebung des Zusatz-Sitzrahmens eine Teleskopschienenführung, im Folgenden Teleskopschiene, zur Verringerung der Reibung der Auszugselemente verwendet werden.

Diese ist im Bereich des Sitzteilrahmens, d.h. unterhalb der Sitzfläche für das Gesäß einer Person, verbaut und ermöglicht eine Linearverschiebung des Zusatz-Sitzrahmens relativ dazu.

Nicht zur Erfindung gehörend, kann eine Vollauszug-Teleskopschiene verwendet werden, die mit drei Elementen (Führungsschienen) ausgestattet ist, um dem Benutzer einen Vollauszug zu ermöglichen. Im Gegensatz zu Teleskopschienen mit Teilauszug enthalten Teleskopschienen mit Vollauszug ein Zwischenelement, das für den zusätzlichen Auszug sorgt, und somit mindestens ein kompletter Sitzplatz geschaffen werden kann.

Eine solche, nicht zur Erfindung gehörende Teleskopschiene besteht aus mindestens zwei Führungsschienen, deren Profile ineinanderlaufen und als Wälz- oder Gleitführung ausgebildet sein können. Die Teleskopschienen, bevorzugt zwei jedoch auch eine oder mehrerer möglich, werden vertikal gegenüberliegend angebracht, d.h. senkrecht zur Sitzfläche. Während die äußere Führungsschiene an den Verbindungsstreben und/ oder den Querstreben des Sitzteilrahmens befestig ist, ist die innere und linear verschiebbare Führungsschiene mit dem Auszugselement des Zusatz-Sitzteilrahmens verbunden. Als Befestigungsmittel dienen Winkel, Schrauben etc..

Diese Auszugselemente, welches bevorzugt paarweise, d.h. mit zwei Teleskopschienen, verbaut ist, dient dem Zusatzsitz als Auflagefläche für das Gesäßkissen, welches später aufgelegt und ggf. fixiert wird. Aus diesem Grund ist das Auszugselement als Winkelprofil ausgebildet, mit einem Horizontalschenkel als Auflagefläche.

Beispielsweise und nicht zur Erfindung gehörend können Teleskopschienen aus Stahl verbaut werden, die zuverlässig und preisgünstig in der Herstellung sind. Alternativ kann Aluminium zur Anwendung kommen, welches die Teleskopauszüge besonders leicht mach.

Diese nicht zur Erfindung gehörenden Teleskopschienen sind endsprechend dimensioniert, um im ausgefahrenen Zustand eine möglichst geringe Durchbiegung aufzuweisen. Insbesondere durch die Verwendung von mindestens zwei Teleskopschienen kann ein stabiler Zusatz-Sitzteilrahmen geschaffen werden, welcher auch höheren Beanspruchungen standhält. So ist es insbesondere durch die Verwendung der nicht erfindungsgemäßen Teleskopschienen möglich, dass der Zusatzsitz freikragend an der Sitzbank angeordnet ist. Somit kann in einfacher Weise ein Zusatzsitz geschaffen werden, welcher zudem äußerst stabil ist und keine zusätzlichen Stützelemente, wie zum Beispiel einen Stützfuß, benötigt.

So finden beispielsweise und nicht zur Erfindung gehörend kugelgelagerte Teleskopschienen mit bis zu 300 kg Tragkraft Anwendung, welche mit einer optionalen Einrastfunktion ausgerüstet sind. Diese Einrastfunktion dient zur Verriegelung des Zusatz-Sitzrahmens in Endposition (im Folgenden EP). Diese Verriegelung muss aktiv seitens eines Benutzers gelöst werden, um den Zusatz-Sitzrahmen wieder in die Anfangsposition (im Folgenden AP) zu befördern. Auch in der AP ist eine optionale Einrastfunktion gegeben, um beispielsweise den Zusatzsitz während der Fahrt zu sichern und um ein unbeabsichtigtes Lösen zu verhindern.

So besteht ein Vorteil durch die eingebaute Verriegelung, da beim Herausziehen oder Hereinschieben des Zusatz-Sitzrahmens aktiv ein Verriegelungshebel zur Fixierung der Anfangs- oder Endposition (AP oder EP) des Zusatz-Sitzrahmens betätigt werden muss.

Alternativ findet ein Riegel Anwendung, der schwerkraftbedingt in die Schließposition fällt, sobald der Zusatzsitz seine Endposition erreicht. Dabei kann es sich um einen plattenförmigen Körper handeln, der sich mit einer Aussparung an seiner Unterseite um einen Bolzen legt. Erst durch ein händisches Anheben des Hebels, kann der Zusatzsitz wieder in Richtung der Anfangsposition verschoben werden.

Zur Unterstützung der Linearbewegung zwischen der AP und der EP kann mindestens ein Hubzylinder im Rahmengestell verbaut werden, um den Zusatz-Sitzrahmen zu bewegen. Durch eine selbständigen Hubbewegung des Hubzylinders kann die EP oder alternativ die AP, je nach Ausrichtung, erreicht werden.

So findet eine Gasdruckfeder Anwendung, wobei der Zylinder der Gasdruckfeder in Sitzteilrahmen aufgenommen und in nicht näher dargestellter Weise mit diesem verbunden ist. Der Kolben der Gasdruckfeder wiederum ist mit dem Zusatz-Sitzteilrahmen in nicht näher dargestellter Weise verbunden.

Sobald der Zusatz-Sitzrahmen sich in EP befindet, kann die Polsterung des Zusatzsitzes aufgebracht werden, wie Rücken- und Sitzpolster und/oder eine Kopfstütze. Dabei ist die Anbringungseinrichtung für die Polsterelemente fest mit dem jeweiligen Rahmen verbunden.

Um den eingeschobenen Zusatzrahmen zu greifen, kann das Polster der Sitzbank zur Seite geschoben werden, um einen Zugriff auf die Vertikal- oder Querstrebe zu ermöglichen.

Die mindestens zwei Rundrohre der Linearführung dienen der statischen Aussteifung für das äußere Gurtschloss im Belastungsfall. Die mindestens zwei und nicht zur Erfindung gehörenden Teleskopschienen generieren eine Sitzflächenbefestigung und eine parallele Führung. Somit kann durch die Kombination von Teleskopschienen und den verwendeten Rohrverbindungen eine besondere Steifigkeit und Stabilität erzielt werden, wobei keine zusätzliche Abstützung notwendig ist, wie sie zum Beispiel bei bekannten Sitzplätzen erforderlich ist. Somit kann eine äußerst belastbare Struktur zur Schaffung zusätzlicher Sitzplätze geschaffen werden.

In einer erfindungsgemäßen Ausführungsform ist vorgesehen, dass an Stelle der sitzrahmenseitigen Teleskopschienen mindestens zwei Rundrohre und mindestens zwei dazu korrespondierenden Rohrabschnitte zur Linearführung verwendet werden. Dabei ist der Zusatz-Sitzteilrahmen mittels mindestens zwei Rohrabschnitten, die um die ortsfesten und ebenfalls rohrförmigen Führungsrohre geführt sind, mit dem Sitzteilrahmen verbunden. Dabei weist der Zusatz-Sitzteilrahmen die mindestens zwei Rohrabschnitten auf, die fest mit dem Zusatz-Sitzteilrahmen verbunden sind und die jeweils entlang eines innerhalb verlaufenden und fest mit dem Sitzteilrahmen verbundenen Führungsrohrs ausziehbar geführt sind.

Die Rohrabschnitte sind unterhalb des Zusatz-Sitzteilrahmen, welches bevorzugt als rechteckiges Rahmenelement ausgebildet ist, fixiert. Eine derartige Fixierung wird beispielsweise durch ein Verschweißen oder eine Verschraubung realisiert. Die Rohrabschnitte, welche sich jeweils an den unteren Seitenbereichen des Rahmenelements befinden, können entlang der innerhalb verlaufenden Führungsrohre geführt werden, bis sie an einem Anschlag anstoßen. Durch den Anschlag ist die lineare Ausziehbewegung an der Endposition begrenzt.

Die Rohrabschnitte sind bevorzugt als Gleitbuchsen ausgebildet, um so eine Ausziehbewegung möglichst einfach zu gestalten.

Die erfindungsgemäßen, zusatzsitzseitigen Rohrführungen stellen somit eine Alternative zu den oben aufgeführten, nicht zur vorliegenden Erfindung gehörenden Teleskopschienen dar**.**

Dabei sind die Rohrführungen, d.h. jeweils ein Rohrabschnitt und ein Führungsrohr, nicht auf zwei Stück beschränkt. Auch lediglich eine Rohrführung oder mehr als zwei Rohrführungen können zur Anwendung kommen. Die Rohrabschnitte sind als Buchsen ausgebildet und können beispielsweise einen Durchmesser zwischen 5-6 cm aufweisen. Dabei kann das Führungsrohr eine Länge zwischen 30-35cm aufweisen. Diese Maßangaben sind lediglich als Beispiele zu verstehen und die vorliegende Erfindung ist hierauf nicht beschränkt.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: eine Vorderansicht eines Fahrzeugsitzes in eingefahrener Stellung
- Figur 2:: eine vordere Perspektivansicht eines Fahrzeugsitzes in eingefahrener Stellung
- Figur 3:: eine hintere Perspektivansicht eines Fahrzeugsitzes in eingefahrener Stellung
- Figur 4:: eine Vorderansicht eines Fahrzeugsitze in ausgefahrener Stellung
- Figur 5:: eine vordere Perspektivansicht eines Fahrzeugsitzes in ausgefahrener Stellung
- Figur 6:: eine hintere Perspektivansicht eines Fahrzeugsitzes in augefahrener Stellung
- Figur 7:: eine vordere Perspektivansicht einer erfindungsgemäßen Ausführungsform
- Figur 8:: eine weitere Perspektivansicht der erfindungsgemäßen Ausführungsform

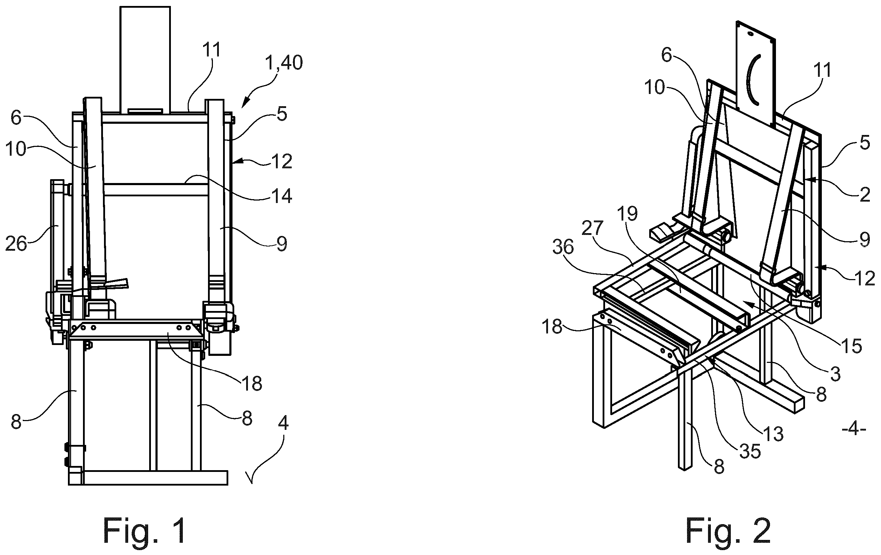

Figur 1 zeigt eine Sitzbank 1, welche ohne Polsterung und nur als Sitzrahmen 40 dargestellt ist. Der Sitzrahmen 40 umfasst einen Rückenlehnenrahmen 12 sowie einen Sitzteilrahmen 13. Der Rückenlehnenrahmen 12 umfasst eine obere Verbindungsstrebe 11 sowie zwei seitlich davon angeordnete Vertikalstreben 5, 6. Zwischen den Vertikalstreben 5, 6 befinden sich die beiden übereinander angeordneten Linearführungen 14, 15, welche als Rundrohre ausgebildet sind.

Der Sitzrahmen 40 ist über die Füße 8 auf dem Fahrzeugboden 4 montiert.

Figur 2 zeigt den Sitzrahmen 40 nach Figur 1 in perspektivischer Darstellung. **In** etwa einem rechten Winkel zum Rückenlehnenrahmen 12 schließt sich der Sitzteilrahmen 13 an, der über seitliche Horizontalstreben 35, 36 verfügt, zwischen denen die Verbindungstreben 18, 19 angeordnet sind.

Im Bereich der Verbindungsstreben 18, 19 sind die Teleskopschienen 38, 39 montiert, welche nicht von der vorliegenden Erfindung umfasst sind und sich somit ebenfalls zwischen den beiden Horizontalstreben 35, 36 befinden.

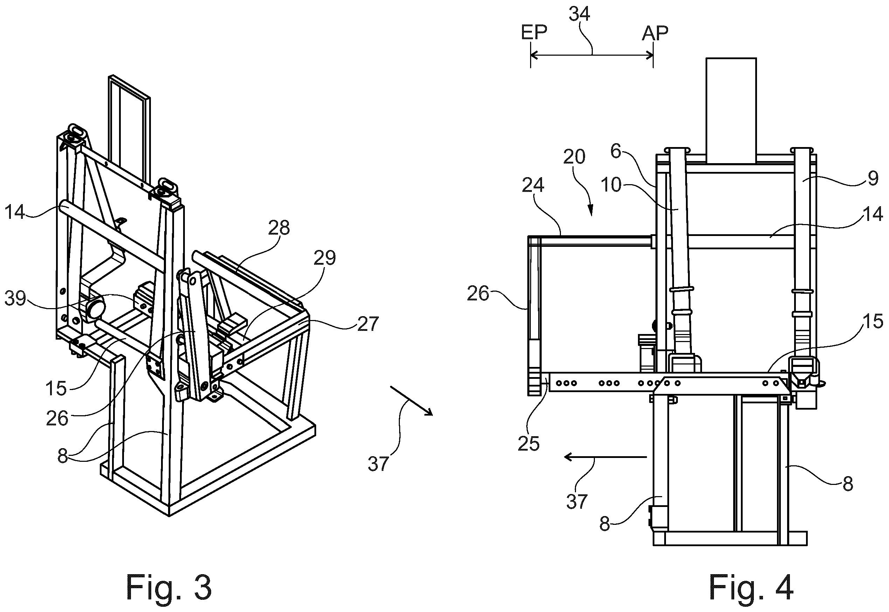

Wie es u.a. in Figur 3 dargestellt ist, sind die nicht erfindungsgemäßen Teleskopschienen 38, 39 mit den Auszugselementen 28, 29 und diese an ihren freien Enden mit der Querstrebe 27 verbunden. Figur 3 zeigt noch den eingefahrenen Zustand des Zusatz-Sitzrahmens 20, wobei die Teleskopschienen 38, 39 mit den Auszugselementen 28, 29 verbunden sind. Diese bilden die Auflage für eine spätere aufgebrachte Sitzfläche, wie z.B. einem Polster und haben eine Winkelform.

Aus Figur 3 ergibt sich des Weiteren die obere Linearführung 14 sowie die unterhalb davon angeordnete Linearführung 15, innerhalb dieser die zunächst nicht gezeigten Horizontalstreben 24, 25 verschiebbar gelagert sind. Diese beiden Horizontalstreben 24, 25 sind an ihrem freien Ende mit der Vertikalstrebe 26 verbunden.

Die Vertikalstrebe 26 ist starr mit der Querstrebe 27 verbunden. Somit lässt sich der die Vertikalstrebe 26 beinhaltende Zusatz-Rückenlehnenrahmen 22 gleichzeitig mit dem die Querstrebe 27 beinhaltende Zusatz-Sitzteilrahmen 23 aus der Fahrzeugsitzbank 1, d.h. dem Sitzrahmen 40 in Pfeilrichtung 37 herausziehen. Der Zusatz-Rückenlehnenrahmen 22 und der Zusatz-Sitzteilrahmen 23 bildet somit eine Einheit und sind wesentliche Bestandteile des Zusatz-Sitzrahmens 20.

Der herausgezogene Zusatz-Sitzrahmen ist in Figur 4 dargestellt. Dabei sind die Vertikalstreben 24, 25 in Pfeilrichtung und linear aus den Linearführen 14, 15 des ortsfesten Sitzbankrahmen 40 herausgezogen.

Die obere Linearführung 14 ist, wie auch die untere Linearführung 15, rohrförmig ausgebildet. Demgegenüber ist die obere Horizontalstreben 24 wie auch die untere Horizontalstreben 25 ebenfalls rohrförmig, jedoch mit einem geringeren Durchmesser ausgebildet.

So ist die obere Horizontalstrebe 24 linear beweglich in der oberen Linearführung 14 geführt. In gleicher Weise ist die untere Horizontalstrebe 25 in der unteren Linearführung 15 linear beweglich geführt.

Dementsprechend ist der gesamte Zusatz-Rückenlehnenrahmen 22 senkrecht zur Vertikalstrebe 6 linear beweglich in die Rückenlehne der Sitzbank 1 einschiebbar und zum Aufbau des Zusatzsitzes herausziehbar. Aus Vereinfachungsgründen wurde in Figur 4 ein Punkt auf der Mittelachse der Vertikalstrebe 26 und ein Punkt auf der Mittelachse der Vertikalstrebe 6 als AP und EP eingezeichnet. Die Strecke 34 wird somit parallel zum Fahrzeugboden 4 oder in einem davon abweichenden Winkel von der Vertikalstrebe 26 zurückgelegt.

Der Zusatzsitz ist somit mit seinem Zusatzsitzrahmen 20 innerhalb des Sitzrahmen 40 der Sitzbank 1 integriert, wobei im eingefahrenen Zustand lediglich die Vertikalstrebe 26 und die damit über den Eckverbinder 30 verbundene Querstrebe 27 seitlich aus dem Sitzrahmen 40 hervorsteht. Dabei steht der Sitzrahmen 40 auf dem Fahrzeugboden 4 auf und bildet mit nicht näher dargestellten Verankerungsvorrichtungen die Basis für die Sitzbank 1.

Die Sitzbank 1 ist in dem hier gezeigten Beispiel als Doppelsitzbank dargestellt, mit den Gurten 9, 10.

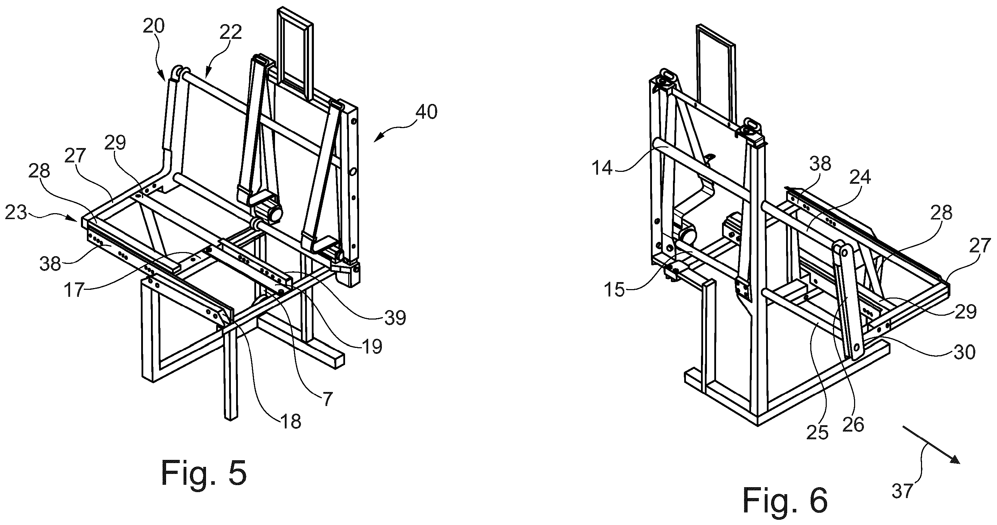

Figur 5 zeigt eine weitere Ansicht des Sitzrahmens 40 mit dem ausgezogenen Zusatz-Sitzrahmen 20, der sich mindestens aus dem Zusatz-Rückenlehnenrahmen 22 sowie dem Zusatz-Sitzteilrahmen 23, welche starr miteinander verbunden sind, zusammensetzt. Die Sitzfläche des Zusatz-Sitzteilrahmen 23, d. h. die Auflagefläche für ein später montierbares Polster, wird gebildet durch die beiden Auszugselemente 28, 29, welche in dem gezeigten Beispiel als Winkelprofile ausgebildet sind. Die Auszugselemente 28, 29 sind mit den nicht erfindungsgemäßen Teleskopschienen 28, 39 verbunden, und somit ebenfalls linear geführt.

Die Verbindungsstreben 18, 19 sind senkrecht zu den Querstreben 7, 17 angeordnet.

Die nicht erfindungsgemäßen Teleskopschienen 38, 39 werden gebildet durch zwei Führungsschienen, deren Profile ineinanderlaufen. Dabei ist die relativ zu der mit dem Sitzrahmen 40 verbundene Führungsschienen als bewegliche Führungsschienen mit dem jeweiligen Auszugselement 28, 29 des Zusatzsitzrahmens 20 verbunden.

Figur 6 zeigt eine rückseitige perspektive Ansicht des Sitzrahmens 40 aus dem in Pfeilrichtung 37 der Zusatz-Sitzrahmen 20 herausgezogen ist. Dabei ist die Vertikalstrebe 26 des Zusatz-Rückenlehnenrahmens 22 starr mit der Querstrebe 27 des Zusatz-Sitzteilrahmens 23 verbunden. Dabei sind die Vertikalstrebe 26 und die Querstrebe 27 mittels einem Eckverbinder 30 starr miteinander verbunden. Somit können Zusatz-Rückenlehnenrahmen 22 und Zusatz-Sitzteilrahmen 23 gleichzeitig aus dem Sitzrahmen 40 in Pfeilrichtung 37 über die Strecke 34 herausgezogen und in entgegengesetzter Richtung eingeschoben werden.

Der Eckverbinder kann einstückig mit der Vertikalstrebe 26 ausgebildet und über eine Verschraubung mit der Querstrebe 27 verbunden sein

Die insbesondere in Figur 6 dargestellten nicht erfindungsgemäßen Teleskopschienen 38, 39 sorgen für einen stabilen Zusatz-Sitzteilrahmen 23.

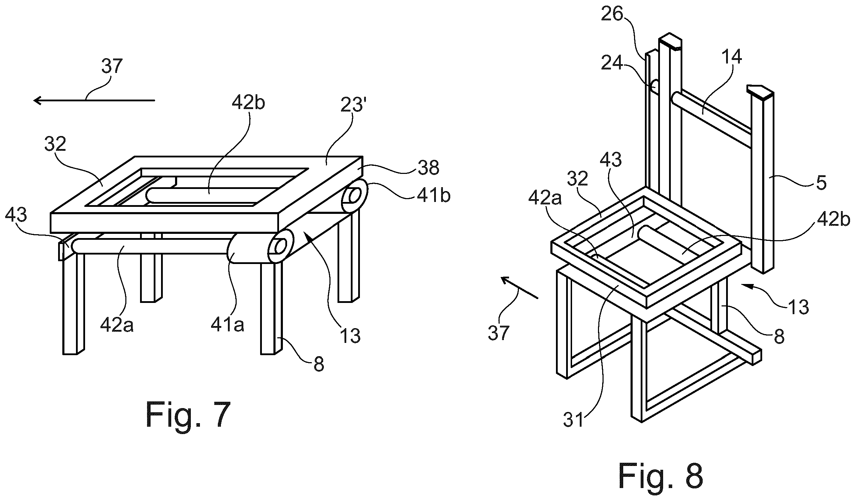

Figur 7 zeigt die erfindungsgemäße Ausführungsform, wobei der Zusatz-Sitzteilrahmen 23' mittels mindestens zwei Rohrabschnitten 41a, b, die um ortsfeste und ebenfalls rohrförmige Führungsrohre 42a, b geführt sind, mit dem Sitzteilrahmen 13 verbunden ist. Dabei weist der Zusatz-Sitzteilrahmen 23' die mindestens zwei Rohrabschnitte 41a, b auf, die fest mit dem Zusatz-Sitzteilrahmen 23' verbunden sind und die jeweils entlang eines innerhalb verlaufenden und fest mit dem Sitzteilrahmen 13 verbundenen Führungsrohrs 42a, b ausziehbar geführt sind.

Figur 7 zeigt den Zusatz-Sitzteilrahmen 23' mit einem geschlossenen Rahmenelement, an dem unterhalb die Rohrabschnitte 41a, b fixiert sind. Die Rohrabschnitte 41a, b, welche sich jeweils an unteren Seitenbereichen des Rahmenelements befinden, können in Pfeilrichtung 37 entlang der innerhalb verlaufenden Führungsrohre 42a, b geführt werden, bis sie an dem Anschlag 43 anstoßen. Durch den Anschlag 43 ist die Ausziehbewegung begrenzt und der Zusatzsitz hat bei Erreichen des Anschlages seine Endposition eingenommen. Der Anschlag 43 ist hier dargestellt als ein senkrecht an die beiden Führungsrohre 42a, b anschließendes Blech, welches die lineare Bewegung der Rohrabschnitte 41a, b seitlich begrenzt.

Figur 8 zeigt eine weitere perspektivische Ansicht der erfindungsgemäßen Ausführungsform, wobei die Querstrebe 32 des Zusatz-Sitzteilrahmens 23' hervorgehoben ist. Die Querstrebe 32 ist, wie auch in der vorherigen Ausführungsform starr mit der Vertikalstrebe 26 des Zusatz-Rückenlehnenrahmen 22 verbunden, so dass beide Rahmen in Pfeilrichtung 37 aus dem Sitzrahmen 40 herausgezogen werden können und durch die Rohrverbindungen 14, 15, 24, 25, 41a, b, 42 a, b linear geführt sind.

### Zeichnungslegende

- 1: Sitzbank
- 2: Rückenlehne
- 3: Sitzteil
- 4: Fahrzeugboden
- 5: Vertikalstrebe
- 6: Vertikalstrebe
- 7: Querstrebe
- 8: Fuß
- 9: Gurt
- 10: Gurt
- 11: Verbindungsstrebe
- 12: Rückenlehnenrahmen
- 13: Sitzteilrahmen
- 14: Linearführung (obere)
- 15: Linearführung (untere)
- 16: Ausziehrichtung
- 17: Querstrebe
- 18: Verbindungsstrebe
- 19: Verbindungsstrebe
- 20: Zusatz-Sitzrahmen

- 22: Zusatz-Rückenlehnenrahmen
- 23: Zusatz-Sitzteilrahmen
- 24: Horizontalstrebe (obere)
- 25: Horizontalstrebe (untere)
- 26: Vertikalstrebe
- 27: Querstrebe
- 28: Auszugselement
- 29: Auszugselement
- 30: Eckverbinder
- 31 32: Querstrebe
- 33: Querstrebe
- 34: Strecke
- 35: Horizontalstrebe
- 36: Horizontalstrebe
- 37: Pfeilrichtung
- 38: Teleskopschiene
- 39: Teleskopschiene
- 40: Sitzrahmen
- 41a, b: Rohrabschnitt
- 42a, b: Führungsrohr
- 43: Anschlag
- AP: Anfangsposition
- EP: Endposition

## Patentansprüche

1. Sitzanordnung für ein Fahrzeug, umfassend eine Sitzbank (1) mit einem Rückenlehnenrahmen (12) und einem Sitzteilrahmen (13), sowie einen an der Sitzbank (1) angeordneten ausziehbaren Zusatzsitz (21), der aus einem Zusatz-Sitzrahmen (20) gebildet ist, der aus einem Zusatz-Rückenlehnenrahmen (22) und einem gesäßseitigen Zusatz-Sitzteilrahmen (23) besteht, wobei der Zusatz-Rückenlehnenrahmen (22) mindestens zwei in der Sitzbank (1) lineargeführte, verschiebbare Horizontalstreben (24, 25) umfasst, die zum Benutzen des Zusatzsitzes (21) aus der Sitzbank (1) seitlich ausziehbar sind und zum Verstauen des Zusatzsitzes (5) in die Sitzbank (1) einschiebbar sind, wobei der Zusatz-Sitzteilrahmen (23, 23') mit dem Zusatz- Rückenlehnenrahmen (22) starr verbunden ist und mit diesem gemeinsam aus der Sitzbank (1) ausziehbar ist, **dadurch gekennzeichnet, dass** der Zusatz-Sitzteilrahmen (23') mittels mindestens zweier Rohrabschnitte (41a, b) die fest mit dem Zusatzsitzteilrahmen (23') verbunden sind, und die um ortsfeste und ebenfalls rohrförmige Führungsrohre (42a, b) geführt sind, mit dem Sitzteilrahmen (13) verbunden ist, und dass die Rohrabschnitte (41a, b) jeweils entlang des innerhalb verlaufenden und fest mit dem Sitzteilrahmen (13) verbundenen Führungsrohres (42a, b) ausziehbar geführt sind.

2. Sitzanordnung nach Anspruch 1, **dadurch gekennzeichnet, dass** der Zusatz-Sitzteilrahmen (23, 23') linearverschiebbar und ausziehbar mit dem sitzbankseitigen Sitzteilrahmen (13) verbunden ist.

3. Sitzanordnung nach Anspruch 1 oder 2, **dadurch gekennzeichnet, dass** der Zusatz-Rückenlehnenrahmen (22) mittels mindestens zwei rohrförmigen Horizontalstreben (24, 25), die in ortsfesten und ebenfalls rohrförmigen Linearführungen (14, 15) geführt sind, mit dem Rückenlehnenrahmen (12) verbunden ist.

4. Sitzanordnung nach Anspruch 3, **dadurch gekennzeichnet, dass** die Linearführung (14, 15) mindestens ein Gleitlager oder ein Wälzlager zur Führung der Horizontalstrebe (24, 25) aufweist.

5. Sitzanordnung nach einem der Ansprüche 1 bis 5, **dadurch gekennzeichnet, dass** wobei die beiden freien Enden der Horizontalstreben (23, 24) über eine Vertikalstrebe (26) miteinander verbunden sind.

6. Sitzanordnung nach Anspruch 5, **dadurch gekennzeichnet, dass** die Vertikalstrebe (26) des Zusatz-Rückenlehnenrahmen (22) starr mit einer Querstrebe (32) des Zusatz-Sitzteilrahmens (23') verbunden ist.

## Claims

1. A seat assembly for a vehicle, comprising a bench seat (1) with a backrest frame (12) and a seat part frame (13), as well as an additional extendable seat (21) located on the bench seat (1), which is formed from an additional seat frame (20) consisting of an additional backrest frame (22) and an additional seat part frame (23) on the seated side, wherein the additional backrest frame (22) comprises at least two slidable horizontal struts (24, 25) linearly guided in the bench seat (1), which struts can laterally extended from the bench seat (1) for using the additional seat (21) and can be pushed back into the bench seat (1) for stowing the additional seat (5), wherein the additional seat part frame (23, 23') is rigidly connected to the additional backrest frame (22) and can be pulled out of the seat bench (1) together with the latter, **characterised in that** the additional seat part frame (23') is connected to the additional seat part frame (13) by means of at least two tube sections (41a, b) which are firmly connected to the additional seat part frame (23') and are guided around fixed and likewise tubular guide tubes (42a, b), and **in that** the tube sections (41a, b) are each guided in an extendable manner along the guide tube (42a, b) that runs inside and is firmly connected to the seat part frame (13).

2. The seat assembly according to claim 1, **characterized in that** the additional seat part frame (23, 23') is linearly slidable and extendably connected to the seat part frame (13) on the bench side.

3. The seat assembly according to claim 1 or 2, **characterised in that** the additional backrest frame (22) is connected to the backrest frame (12) by means of at least two tubular horizontal struts (24, 25) which are guided in fixed and likewise tubular linear guides (14, 15).

4. The seat assembly according to claim 3, **characterised in that** the linear guide (14, 15) has at least one plain bearing or a roller bearing for guiding the horizontal strut (24, 25).

5. The seat assembly according to any one of claims 1 to 5, **characterised in that** the two free ends of the horizontal struts (23, 24) are connected to each other via a vertical strut (26).

6. The seat assembly according to claim 5, **characterised in that** the vertical strut (26) of the additional backrest frame (22) is rigidly connected to a cross strut (32) of the additional seat part frame (23').

## Revendications

1. Agencement de siège pour un véhicule, comprenant une banquette (1) avec un cadre de dossier (12) et un cadre de partie de siège (13), ainsi qu'un siège supplémentaire (21) extensible, disposé sur la banquette (1), qui est formé à partir d'un cadre de siège supplémentaire (20), qui est constitué d'un cadre de dossier supplémentaire (22) et d'un cadre de partie de siège supplémentaire (23) côté postérieur, dans lequel le cadre de dossier supplémentaire (22) comprend au moins deux entretoises horizontales coulissantes (24, 25), guidées linéairement dans la banquette (1), qui sont extensibles latéralement depuis la banquette (1) pour l'utilisation du siège supplémentaire (21) et qui peuvent être insérées dans la banquette (1) pour le rangement du siège supplémentaire (5), dans lequel le cadre de partie de siège supplémentaire (23, 23') est relié de manière rigide au cadre de partie de dossier supplémentaire (22) et est extensible conjointement à celui-ci depuis la banquette (1), **caractérisé en ce que** le cadre de partie de siège supplémentaire (23') est relié au cadre de partie de siège (13) au moyen d'au moins deux sections de tube (41a, b) qui sont reliées de manière solidaire au cadre de partie de siège supplémentaire (23') et qui sont guidées autour de tubes de guidage (42a, b) fixes et également tubulaires, et que les sections de tube (41a, b) sont guidées de manière extensible chacune le long du tube de guidage (42a, b) s'étendant à l'intérieur et relié de manière solidaire au cadre de partie de siège (13).

2. Agencement de siège selon la revendication 1, **caractérisé en ce que** le cadre de partie de siège supplémentaire (23, 23') est relié au cadre de partie de siège (13) côté banquette de manière à pouvoir coulisser linéairement et de manière extensible.

3. Agencement de siège selon la revendication 1 ou 2, **caractérisé en ce que** le cadre de dossier supplémentaire (22) est relié au cadre de dossier (12) au moyen d'au moins deux entretoises horizontales (24, 25) tubulaires, qui sont guidées dans des guidages linéaires (14, 15) fixes et également tubulaires.

4. Agencement de siège selon la revendication 3, **caractérisé en ce que** le guidage linéaire (14, 15) présente au moins un palier lisse ou un palier à roulement pour le guidage de l'entretoise horizontale (24, 25).

5. Agencement de siège selon l'une des revendications 1 à 5, **caractérisé en ce que** les deux extrémités libres des entretoises horizontales (23, 24) sont reliées entre elles par l'intermédiaire d'une entretoise verticale (26).

6. Agencement de siège selon la revendication 5, **caractérisé en ce que** l'entretoise verticale (26) du cadre de dossier supplémentaire (22) est reliée de manière rigide à une entretoise transversale (32) du cadre de partie de siège supplémentaire (23').
